# EUROPEAN PATENT SPECIFICATION

(11) **EP 0 340 874 B1**
(45) Date of publication and mention of the grant of the patent: **31.03.1993**
(21) Application number: 89201133.9
(22) Date of filing: 02.05.1989
(51) Int. Cl.: B65G 25/06

(54) **Hydraulic drive with single piston rod**
Hydraulischer Antrieb mit einer einzigen Kolbenstange
Entraînement hydraulique à tige de piston unique

(30) Priority: 03.05.1988 US 189540; 03.04.1989 US 333136
(43) Date of publication of application: 08.11.1989
(73) Proprietor: Foster, Raymond Keith, Madras Oregon 97741 (US)
(72) Inventor: Foster, Raymond Keith, Madras Oregon 97741 (US)
(74) Representative: Hoijtink, Reinoud

(56) References cited:
- EP-A- 0 259 900
- EP-A- 0 259 901
- US-A- 4 526 086

## Description

### Technical field

This invention relates to hydraulic drive units. A drive unit of this type is known from EP-A-0 259 901. More particularly, it relates to the provision of a simplified hydraulic drive unit comprising plural movable cylinder bodies on a single piston rod.

### Background Art

There is a need for a compact drive unit composed of three or more reversible sections which have the capability of being moved either in unison or separately. One use for such a drive unit is for powering the floor members of a reciprocating floor conveyor.

Basically considered, a reciprocating floor conveyor comprises at least one group of at least three elongated floor members in a hydraulic drive system which operates to drive at least a majority of the floor members in unison in the desired conveying direction, and to retract them individually. Systems are in use in which all of the floor members are driven in unison, in the desired conveying direction, and are then individually retracted sequentially. It has also been proposed to drive a majority of the floor members in the desired conveying direction while at the same time retracting the remaining floor slat members. The present invention has application for both types of systems.

### Disclosure of the invention

A hydraulic drive unit of the present invention is characterized by the features as defined in the characterizing part of claim 1.

In preferred form, a separate fluid delivery and return tube is provided for each fluid chamber. These tubes extend through the hollow interior of the piston rod. Each tube has an inner end positioned to communicate with its first fluid chamber. The outer end of each tube is located at the end of the piston rod. The hollow interior of the piston rod defines a passage space between and around the tubes. The piston rod includes fluid delivery and return passages which connect the passage space of the hollow interior with each of the second fluid chambers.

In preferred form, the piston rod is a continuous one-piece tubular member. Each piston head includes an annular body which surrounds and is thread-connected to the piston rod. The piston rod is constructed to have stepped outside diameter portions so that each of the annular body portions of the piston heads can be slid into its position on the piston rod from one end of the piston rod.

In preferred form, the piston rod includes means at its first end for establishing a separate port in communication with the outer end of each of the tubes and an additional separate port in communication with the passage space in the hollow interior of the piston rod. Preferably, the piston rod is provided with a spherical ball at its first end and the ports are located within the spherical ball. In such embodiment, the spherical ball is adapted to be received within a socket which includes a separate fluid passageway in communication with each of the ports.

In a second embodiment of the invention, the first chambers are connected in parallel to a first hydraulic line which leads to a switching circuit. The second chambers are connected together in series and an end chamber of the group is connected to a second hydraulic line which extends to the switching circuit. A check valve is located in each conduit leg which extends between adjacent second chambers. The check valves are biased so that when the second hydraulic line becomes a pressure line, the hydraulic fluid will flow first into the second chamber of the end cylinder that is directly connected to the second hydraulic line, and then from such second chamber to the second chamber of the next cylinder in line, and then from the second chamber of that cylinder to the second chamber of the next cylinder in line, etc. The check valves are also positioned so that when the second hydraulic line becomes a return line, the second chambers will discharge one at a time into the second hydraulic line. The second chamber of the first cylinder will discharge and the first cylinder will move relative to its piston head. Then an operator portion of the check valve will contact the piston head and be depressed by the contact, opening the check valve and communicating the second chamber of the second cylinder with the second chamber of the first cylinder. This will result in hydraulic fluid flowing out of the second chamber for the second cylinder into the second chamber for the first cylinder and then into the second hydraulic line. The second cylinder will move as its second chamber discharges hydraulic fluid. At the end of its movement, an operator portion of its check valve will contact the piston head of the second cylinder, causing such operator to be depressed and causing the check valve to open and allow hydraulic fluid to flow from the second chamber of the third cylinder into the second chamber of the second cylinder, then on to the second chamber of the first cylinder, and then to the second hydraulic line.

The first and second hydraulic lines may be contained within the elongated piston rod. Preferably also, a swivel connection is provided at one end of the elongated piston rod and the first and second hydraulic lines extend outwardly from the elongated piston rod through the swivel connection.

### Brief Description of the Drawing

Fig. 1 is a top plan view of a hydraulic drive unit constructed according to the present invention, showing the piston cylinder assembly and a typical supporting frame in solid lines, such view also presenting a phantom line showing of the transverse drive beams, a group of the floor members, and connector members on the transverse drive beams which serve to connect the floor members to the transverse drive beams;
Fig. 2 is an enlarged scale longitudinal sectional view of the hydraulic drive unit, with the hydraulic circuit shown schematically;
Fig. 3 is an enlarged scale longitudinal sectional view of a check valve in an open position, opened by contact of its operation with a piston head;
Fig. 4 is an elevational view of a second drive unit embodying the present invention, shown in two separate lengths, with some parts of the unit shown in longitudinal section;
Fig. 5 is a pictorial view of the hydraulic drive unit shown by Fig. 4;
Fig. 6 is an enlarged scale fragmentary sectional view in the region of a cylinder end member at one end of a cylinder body;
Fig. 7 is a longitudinal sectional view of the second end portion of the hydraulic drive unit shown in Fig. 4, including a longitudinal sectional view of a second end member at the second end of a cylinder body, such view including a side elevational view of a closure plug for the second end portion of the piston rod;
Fig. 8 is an enlarged scale view of a ball component at a first end of the piston rod, such view also showing a support member at the first end of the piston rod which supports separate delivery/return tubes which extend between ports in the ball and fluid chambers on a common side of the piston heads, and also showing communication between a fourth port in the ball and the hollow interior of the piston rod;
Fig. 9 is a cross-sectional view taken substantially along line 8--8 of Fig. 8;
Fig. 10 is a cross-sectional view taken substantially along line 10--10 of Fig. 8;
Fig. 11 is an enlarged scale view of a major portion of the piston rod, shown in three separate lengths;
Fig. 12 is a view like Fig. 11, showing the remainder of the piston rod, and showing the closure plug at the second end of the piston rod exploded in position from the second end portion of the piston rod;
Fig. 13 is a longitudinal sectional view, on a larger scale, in the region of one of the piston heads, and
Fig. 14 is a schematic diagram of the hydraulic drive unit shown in Figs. 4-13.

### Best Mode for Carrying Out the Invention

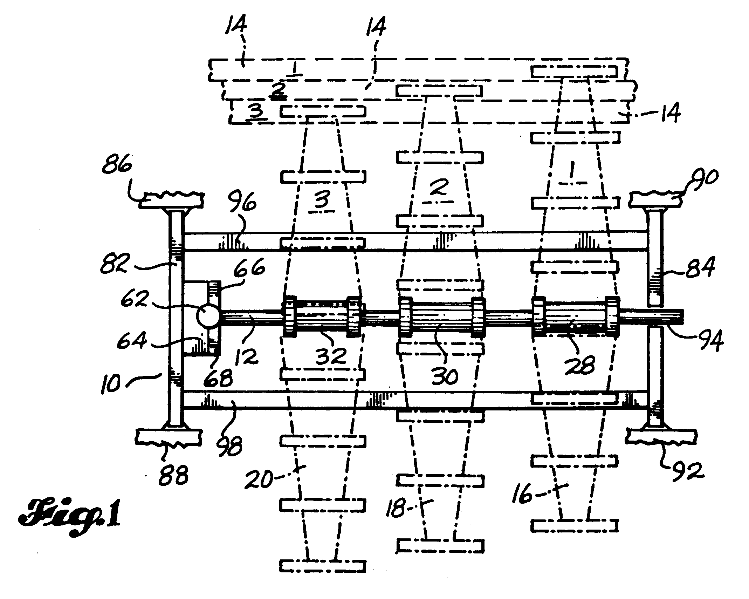

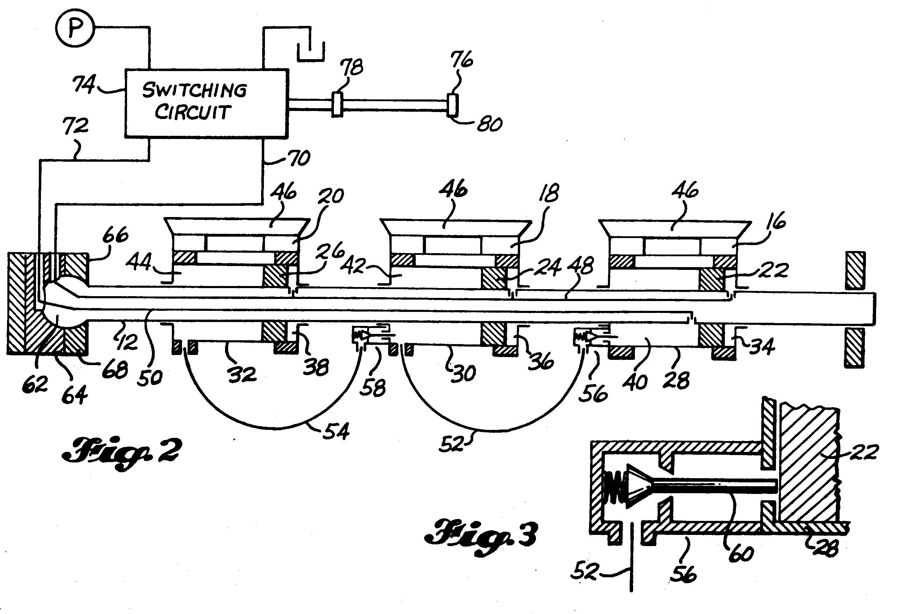

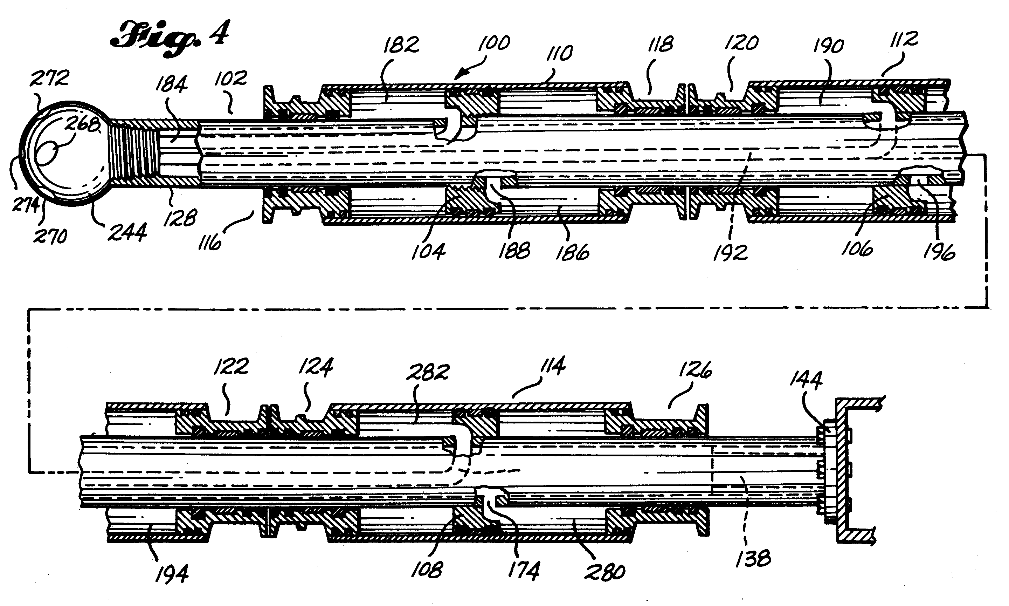

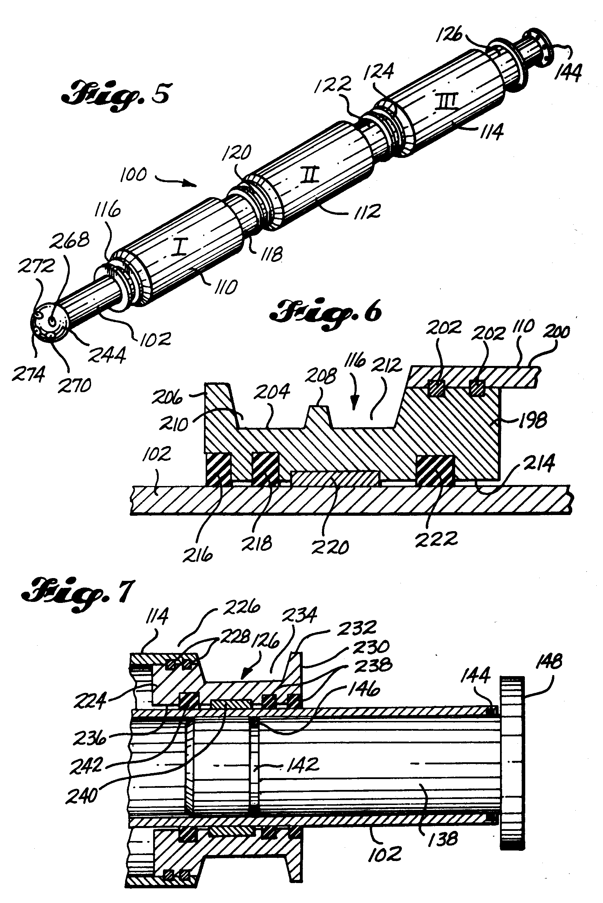

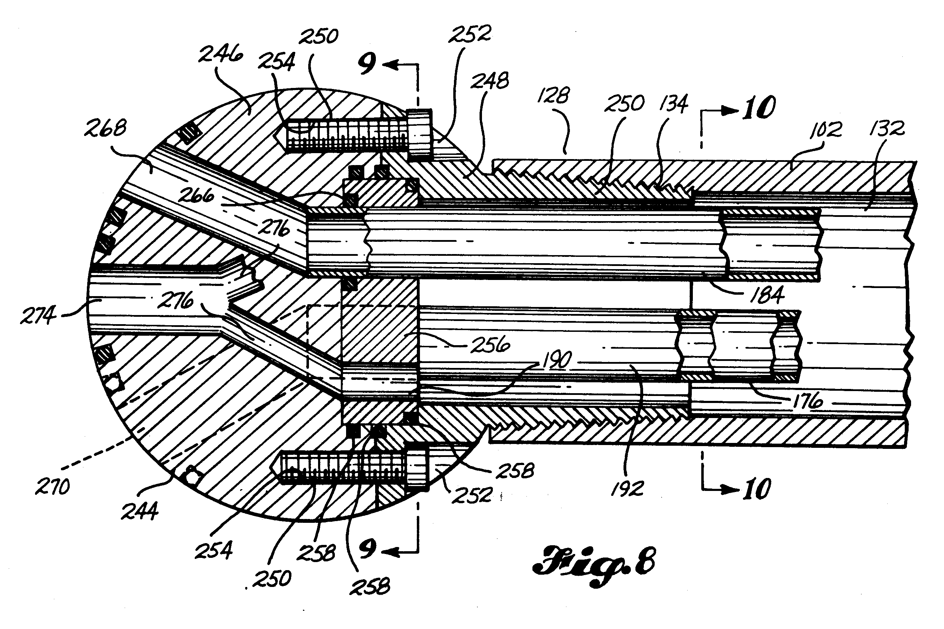

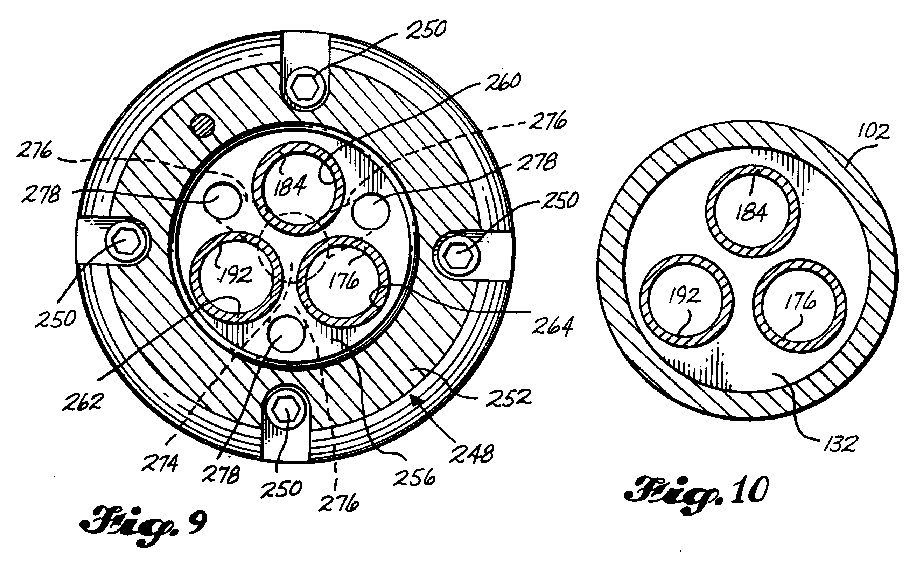

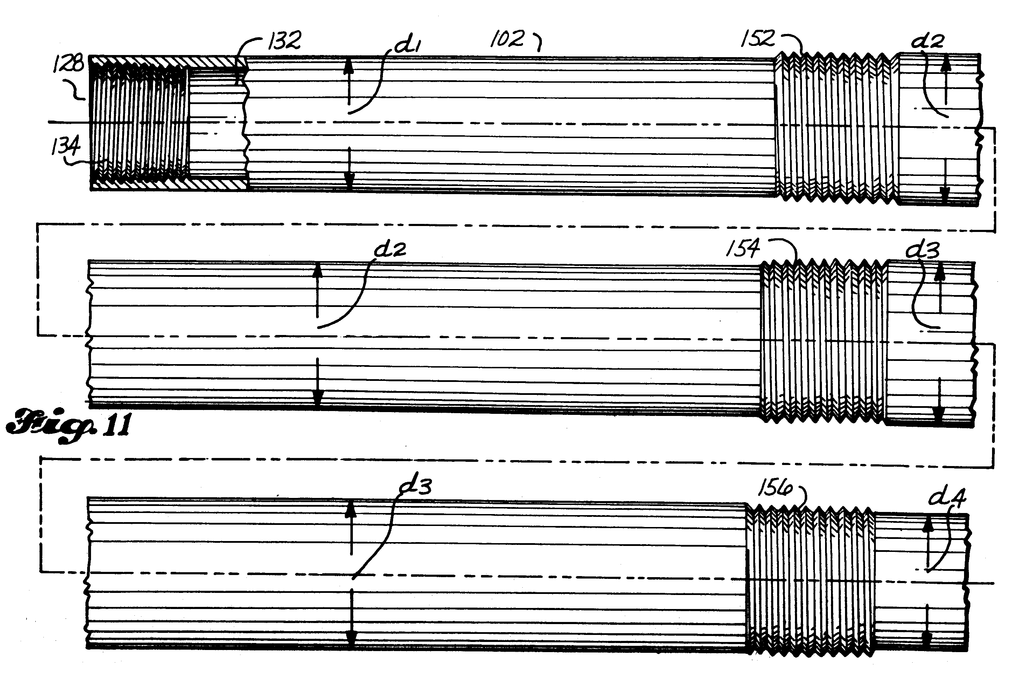

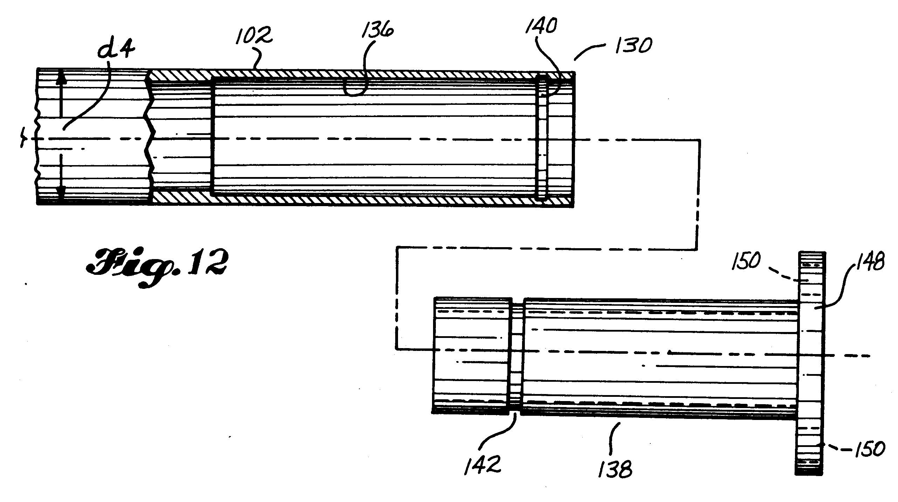

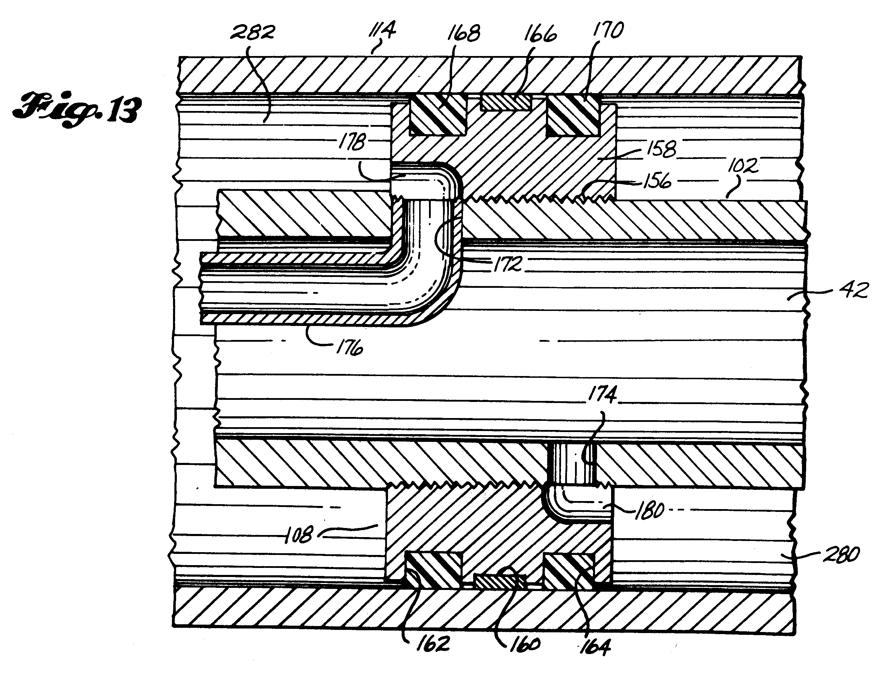

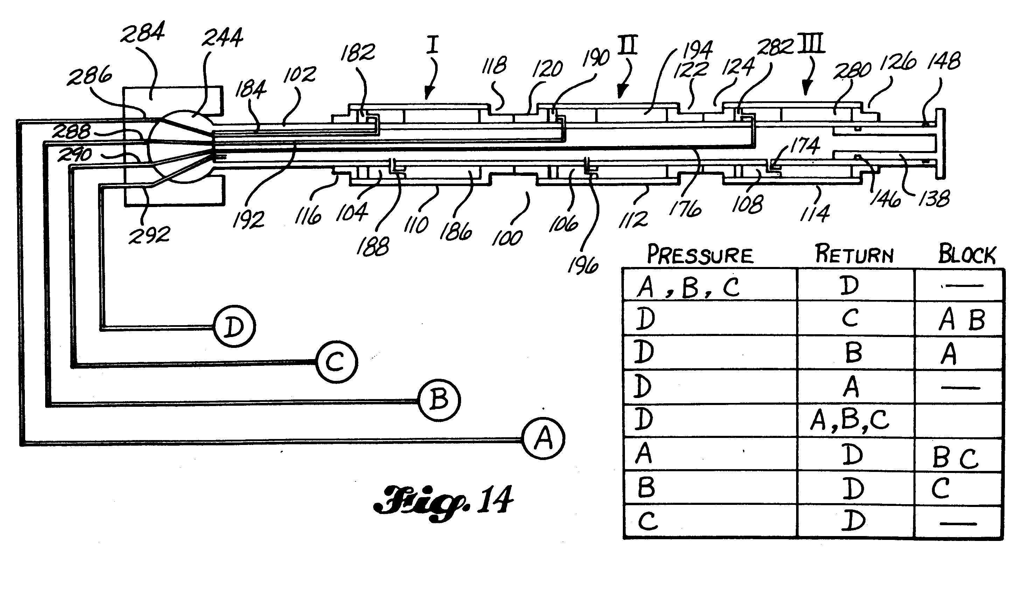

Referring to Figs. 1 and 2, the hydraulic drive unit 10 shown comprises a single elongated piston rod 12 which extends parallel to the floor slat members 14 and perpendicular to the transverse drive beams 16, 18, 20. In use, the piston rod 12 is positioned at a location that is offset below the transverse drive beams 16, 18, 20 (Fig. 2). A piston head for each transverse drive beam 16, 18, 20 is positioned on the piston rod 12. There are three groups of floor members and hence three transverse drive beams 16, 18, 20 and three piston heads 22, 24, 26. The piston heads 22, 24, 26 are spaced apart axially along the piston rod 12 and are fixed in position on the piston rod 12.

A cylinder is provided for each piston head 22, 24, 26. Hence, there are three cylinders 28, 30, 32. Each cylinder 28, 30, 32 is mounted to reciprocate back and forth on the piston rod 12 relative to its piston, head 22, 24, 26. Each cylinder 28, 30, 32 and its piston head 22, 24, 26 together define two variable volume chambers, one axially endwise from each end of the piston head 22, 24, 26. Herein, the variable volume chambers on the right side of the piston heads 22, 24, 26, as shown in Fig. 2, are referred to as the first chambers. The variable volume chambers 40, 42, 44, which in Fig. 2 are on the left side of the piston heads 22, 24, 26, are referred to as the second chambers.

Each cylinder 28, 30, 32 is connected to an associated drive beam 16, 18, 20. Cylinder 28 is connected to drive beam 16. Cylinder 30 is connected to the drive beam 18. Cylinder 32 is connected to the drive beam 32. The manner of connection may be accomplished in any suitable manner such as by clamps at the cylinder ends.

Each transverse drive beam 16, 18, 20 includes connectors 46 which extend parallel to the floor members 14, and to which the floor members 14 are attached in a known manner. Fig. 1 shows three floor members 14 of a set. The floor member 14 marked with the numeral "1" is connected to drive beam 16. The floor member 14 marked with the numeral "2" is connected to drive beam 18. The floor member 14 marked "3" is connected to drive beam 20. This pattern of connection of floor members is repeated laterally across the full width of the floor. Movement of cylinder 28 causes a movement of drive beam 16 and the number "1" floor members 14 attached to it. Movement of cylinder 30 moves drive beam 18 and the number "2" floor members 14 attached to it. Movement of cylinder 32 moves drive beam 20 and the number "3" floor members 14 attached to it.

The hydraulic system comprises a first hydraulic line 48 and a second hydraulic line 50. The first chambers 34, 36, 38 are connected in parallel to hydraulic line 48. The second chambers 40, 42, 44 are connected together in series and chamber 40 of this group is connected to hydraulic line 50. Conduit leg 52 which interconnects chambers 40, 42 includes a check valve 56. In similar fashion, conduit leg 54 which interconnects chambers 42, 44 includes a check valve 58. The check valves 56, 58 are constructed to open when hydraulic line 50 is a pressure line. The pressure enters chamber 40, immediately opens check valve 56, and then via conduit 52 enters chambers 42, and then immediately opens check valve 58 and via conduit 54 enters chamber 44. As a result, all three cylinders move substantially simultaneously when hydraulic line 50 is a pressure line.

When hydraulic line 48 is the pressure line, and line 50 is a return line, the check valves will be biased closed by the pressure in chambers 42, 44. Chamber 40 is connected directly to line 50. As a result, it will discharge fluid into the return line 50, and cylinder 28 will move, as pressure fluid is entering chamber 34 via the hydraulic line 58. At the end of movement of cylinder 28, an operator 60 that is a part of the check valve 56 contacts the piston head 22. This causes a movement of the operator 60 to the left, as pictured in Fig. 3, and opens the check valve. Thereafter, pressure fluid in chamber 42 is exhausted via conduit 52, the passageways in check valve 56, chamber 40, and hydraulic line 50. At the same time, cylinder 30 moves to the right in response to pressure fluid entering chamber 36. When the cylinder 30 reaches its end position, a similar operator 60 in check valve 58 makes contact with piston head 24. This opens the check valve 58 and allows pressure fluid within chamber 44 to be put in communication with the return line 50 via conduit 54, the passageways in check valve 58, conduit 52, the passageways in check valve 56 and chamber 40. Conduit legs 52, 54 may be flexible hydraulic hoses of sufficient length to permit the necessary relative movement of the cylinders.

The hydraulic lines 48, 50 may be built into the piston rod 12. Preferably, piston rod 12 is provided with a ball end 62 and such ball end 62 is clamped within a socket mount composed of members 64, 66, 68. The ball and socket joint thus formed allows some pivotal movement. Fluid passageways are provided in member 64 for delivering fluid pressure to and returning fluid pressure from the hydraulic lines 48, 50. Hydraulic line 70 is a continuation of hydraulic line 48. Hydraulic line 72 is a continuation of hydraulic line 50. Lines 70, 72 are connected to a switching circuit 74. Switching circuit 74 is of known construction. It includes an operator rod 76 that is provided with a pair of stops 78, 80. The operator 76 is positioned adjacent one of the drive beams 16, 18, 20. Shortly before the drive beam reaches the end of its path of travel in a first direction, it contacts member 78 and in so doing operates the switching circuit. Shortly before the same drive beam reaches the end of its travel in the opposite direction it contacts member 80 and in so doing again operates the switching circuit. Each operation of the switching circuit changes the character of the hydraulic line 70, 72. For example, if hydraulic line 70 is a pressure line and a hydraulic line 72 is a return line, an operation of the switching circuit will make hydraulic line 72 the pressure line and hydraulic line 70 the return line.

It is to be understood that essential features of the invention include a single elongated piston rod and at least three piston heads and travelling cylinders on the rod which are equal in number to the number of floor members in a group. In the illustrated example there are three floor members per group, respectively identified by the numbers "1", "2", and "3". In another installation there may be "4", "5", or "6" members per group, for example.

The incorporation of the hydraulic lines 48, 50 inside the piston rod 12 may be accomplished in a number of ways. For example, the piston rod 12 may have a basic tubular structure and hydraulic lines 48, 50 may be small diameter conduits which are positioned within the hollow interior of the piston rod 12. Or, the piston rod 12 may be a solid member and hydraulic lines 48, 50 may be passageways which are drilled in the member 12. The ball portion of the ball and socket joint may be a separate member that is welded to the end of the elongated piston rod 12. The rod 12 may be constructed in sections to facilitate its manufacture and the manufacture and installation of the fluid lines 48, 50.

The support of the piston rod 12 may be accomplished in several ways. By way of example, a short transverse mounting beam 82, 84 may be provided at each end of the piston rod 12. The location of the cylinders 28, 30, 32 in a single line, makes it possible to substantially reduce the length of the frame members 82, 84 in comparison with any other known hydraulic drive unit for a reciprocating floor conveyor. In Fig. 1, the frame members 82, 84 are shown connected at their ends to frame members 86, 88, 90, 92 which are frame portions of the installation in which the hydraulic unit is incorporated. Preferably, the end of piston rod 12 opposite the ball connection 62 is restrained but not firmly connected to anything. For example, it might merely consist of a straight portion which fits into an opening 94 that is formed in frame member 84. The use of a ball and socket joint at a first end of the piston rod 12 and the positioning of the opposite end portion within an opening at a floor within frame member 84 allows the piston rod 12 to flex in response to some of the forces that are imposed upon it.

End frame members 82, 84 may be connected together by longitudinal frame members 96, 98. The upper surfaces of frame members 96, 98 may carry strips of a bearing material (e.g. self-lubricating plastic) on which the drive beams 16, 18, 20 slide.

Referring to Figs. 4 and 5, the hydraulic drive unit 100 that is illustrated comprises a single elongated piston rod 102, three axially spaced-apart piston heads 104, 106, 108 secured to the piston rod 102, and three cylinder bodies 110, 112, 114. Each cylinder body 110, 112, 114 is mounted to reciprocate back and forth on the piston rod 102 relative to its piston head 104, 106, 108. Each cylinder body 110, 112, 114 and its piston head 104, 106, 108 together define two variable volume fluid chambers which are separated by the piston heads 104, 106, 108.

Each cylinder body 110, 112, 114 includes a cylinder head or end member at each of its ends. The cylinder heads for cylinder body 110 are designated 116 and 118. The cylinder heads for cylinder body 112 are designated 120 and 122. The cylinder heads for the cylinder body 114 are designated 124 and 126. These cylinder heads mount the cylinder bodies for back and forth reciprocation along the piston rod 102. The cylinder heads also carry seals which prevent hydraulic fluid leakage out from the opposite ends of the cylinder bodies. The cylinder heads form a couple for effectively transferring abaxial loads which are imposed on the cylinder bodies from the cylinder bodies to the piston rod 102.

Referring to Figs. 11 and 12, in preferred form, the piston rod 102 is a one-piece tubular member having a first end 128, a second end 130 and a hollow interior 132. The hollow interior 132 may be a continuous center passageway which extends throughout the full length of piston rod 102. At the first end 128, the interior may be threaded at 134. At the second end 130, the piston rod 102 may include an increased diameter section 136 which is sized to receive a closure plug 138. A first annular seal groove 40 may be formed in the inner wall of section 136. A second annular seal groove 142 may be formed in the outer wall of the closure plug 138. Conventional 0-ring seals 144, 146, (Fig. 7) are installed in the grooves 140, 142 for the purpose of sealing against leakage of hydraulic fluid out from the second end of the piston rod 102. The closure plug 138 includes a mounting plate 148 at its outer end which may include fastener receiving openings 150.

Piston rod 102 also includes three exterior threaded sections 152, 154, 156, one for each of the piston heads 104, 106, 108. As shown by Figs. 11 and 12, the outside diameter of the piston rod 102 varies in a manner permitting easy installation and removal of annular body portions of the piston heads 104, 106, 108. A first section of the piston rod 102, extending from the first end 128 to the first threaded section 152, includes an outside diameter d-1. In its extent between threaded section 152 and the second threaded section 154, the piston rod 102 has an outside diameter d-2 which is slightly larger than diameter d-1. In its extent between threaded section 154 and the third threaded section 156, the piston rod 102 has a third outside diameter d-3 which is slightly larger than diameter d-2. In its extent between threaded section 156 and the second end 130, the piston rod 102 has an outside diameter d-4. Diameter d-4 is slightly smaller than diameter d-3. The threads in section 152 are cut into a length of the diameter d-2. In similar fashion, the threads in section 154, 156 are cut into lengths of the diameter d-3.

Owing to the above-described construction of the piston rod 102, the annular body of piston head 106 is slid into place on the piston rod 102 from the first end 128. It includes a threaded opening through which diameters d-1 and d-2 will fit. The center opening in the annular body for piston head 106 is aligned with the first end 128 of piston rod 102 and then the annular body is moved along the piston rod 102 to the threaded section 154. When it reaches the threaded section 154, it is rotated for the purposes of threading it onto the threaded section 154 to, in that manner, connect it to the piston rod 102. The annular body for piston head 104 includes a threaded center opening which is sized to receive and pass the first diameter section of the piston rod 102. Accordingly, following installation of the annular body for piston head 106, the center opening in the annular body for piston head 104 is aligned with end 128 of piston rod 102. Then, this annular body is slid along the first diameter section of the piston rod 102 to the threaded section 152. The annular body is then rotated for the purpose of threading it onto the threaded section 152 to, in that manner, connect it to the piston rod 102. The annular body 158 for piston head 108 is installed from the second end 130 of the piston rod 102. It has a threaded central opening which is sized to freely pass the second end portion of the piston rod 102. The annular body 158 of piston head 108 is installed in the same manner as the annular bodies for the piston heads 104, 106. That is, the center opening in the annular body 158 is aligned with the second end 130 of piston rod 102. Then, the annular body 158 is slid along the second portion of piston rod 102 to the threaded section 156. It is then rotated for the purpose of threading it onto the threaded section 156 to, in that manner, secure it to the piston rod 102.

Fig. 13 is a fragmentary longitudinal sectional view of the hydraulic drive unit 100 in the region of piston head 108 for drive section III. In this view, the annular body portion 158 of piston head 108 is shown to be thread-connected to the threaded section 156 on piston rod 102. Body 158 is shown to include a central annular groove 160 that is flanked by annular grooves 162, 164. A wear ring 166 is positioned within groove 160. Seal rings 168, 170 are positioned within the grooves 162, 164.

The piston rod 102 is provided with a pair of sidewall openings 172, 174 in the vicinity of piston head 108. Opening 172 is sized to receive the inner end portion of a tube 176. Opening 172 communicates with a port 178 which is machined into the body 158. Opening 174 communicates with a port 180 which is machined into a second portion of the body 158. The construction that is illustrated by Fig. 13 is essentially duplicated at each of the piston heads 104, 106. That is, for each of piston heads 104, 106, a fluid-conveying tube extends through the hollow interior 132 of the piston rod 102. Each tube has an inner end portion which is connected to communicate with its fluid chamber. The hollow interior 132 of the piston rod 102 is in communication with each second fluid chamber.

Referring to Fig. 4, the pipe or tube leading to fluid chamber 182 in drive section I is designated 184. The passageway leading from the hollow interior 132 of piston rod 102 into fluid chamber 186 is designated 188. The pipe or tube leading to fluid chamber 190 in drive section II is designated 192. The passageway leading from the hollow interior 132 of the piston rod 102 into fluid chamber 194 is designated 196.

Referring to Fig. 6, end member or head 116, which is identical to end members 120, 124, comprises an inner end portion 198 which extends into the end of a cylindrical wall 200 of cylinder body 110. Lock rings 202 may be used for connecting member 116 to member 200. Member 116 includes an outer end portion 204 which projects endwise outwardly from member 200. It may include rings 206, 208 and grooves 210, 212, which define a structure which receives members used for connecting the end member 116 to some other structure, such as a transverse drive beam for a rreciprocating floor conveyor (Fig. 1). The member 116 includes a center opening 214 sized to snuggly fit around the piston rod 102. The wall of opening 214 includes a plurality of axially spaced-apart grooves for receiving annular wiper rings 216, 218, a wear ring 220, and a seal ring 222.

Referring to Fig. 7, the end member or head 126 is identical to end members or heads 118, 122. It includes an inner end portion 224 which fits into the cylindrical wall portion 226 of cylinder body 114. As in the case of end member 116, a pair of lock rings 228 may be used for securing member 226 to member 126. Member 126 includes an axially outwardly projecting outer end portion 230 comprising a ring 232 and a groove 234. The ring 232 and groove 234 provide a portion used for connecting the member 126 to another structure, such as a transverse beam of a reciprocating floor conveyor.

Fig. 1 illustrates a manner of associating transverse drive beams of a reciprocating conveyor with each movable section of the drive unit. This same type of arrangement can be used with the drive unit shown by Figs. 4-14, with spaced-apart central side portions of the transverse drive beam being connected to the end members 116, 118 and 120, 122 and 124, 126. An advantage of this type of connection is that the end members of each section I, II, III of the drive unit 100 create a couple which resists abaxial forces and moments imposed by the transverse drive beams on the travelling cylinder bodies.

End member 126 includes a center opening 236 sized to snuggly fit about the piston rod 102. A plurality of axially spaced-apart annular grooves are provided in the wall of the center opening 236 for receiving a pair of wiper rings 238, a wear ring 240, and a seal ring 242.

The end members 116, 118 and 120, 122, and 124, 126 are intentionally given a substantial length to aid them in transferring abaxial forces and moments onto the piston rod 102. This arrangement of the end members 116, 118 and 120, 122 and 124, 126, together with the use of a continuous one-piece tubular piston rod 102, results in a drive unit which is not only simple in construction and compact, but is quite strong and is self-bracing. The drive unit can carry substantial abaxial forces and moments without damage to the seals.

In preferred form, a connector ball 244 is provided at the first end 128 of the piston rod 102. Ball 244 may be constructed from an outer major part 246 and an inner minor part 248. The inner part 248 may include an externally threaded pin or nipple 250 which threads into the threads 134. Ball parts 246, 248 are shown to be connected together by a plurality of machine screws 250. These machine screws 250 are shown to extend through openings in a flange portion 252 of the minor part 248 and to thread into openings 254 in the major part 246. Of course, the machine screws 250 could, instead, extend through openings in the major part 246 and thread into openings in the minor part 248.

As illustrated, a support member, which may be a disk 256, is clamped between the two portions 246, 248 of the ball 244. A plurality of 0-ring seals 258 are provided between the member 256 and the ball parts 246, 248, to seal against fluid leakage. As best shown by Fig. 9, member 256 is formed to include three parallel axial openings 260, 262, 264. These openings are sized to snuggly receive the outer end portions of the fluid supplied in return tubes 184, 192, 176. As shown in Fig. 8, in connection with tube 184, an O-ring seal 266 is provided in a groove about the opening 260 for sealing between:the member 256 and the tube 184. Identical seals are provided around tubes 192 and 176.

Fig. 8 shows the outer end of tube 184 communicating with a passageway 268 in the ball 244. There is a broken line showing of a similar passageway 270 for tube 192. A third passageway 272 (Fig. 4) exists in the ball 244 for tube 176. A fourth passageway 274 connects at its inner end to a plurality of branch passageways 276. The branch passageways 276 extend to an equal number of openings 278 which are provided in member 256. Each of these openings 278 communicate with the inner space 132 of the piston rod 102 which exists around and inbetween the tubes 176, 184, 192. As previously described, this space 132 serves as the supply and return passageway for each of the three second fluid chambers 186, 194, 280.

According to an aspect of the invention, the ball 244 is received within a socket member 284. The socket member 284 may be constructed in two pieces which are bolted together about the ball 244. The socket member 284 includes passageways 286, 288, 290, 292 which communicate respectively with the outer ends of the passageways 180, 184, 183, 186 in the ball 156.

Referring to Fig. 14, passageway 286 is shown to extend to a control port A. Passageway 288 is shown to extend to a control port B. Passageway 290 is shown to extend to a control port C. Passageway 292 is shown to extend to a control port D. Stated another way, control port A is connected to fluid chamber 182 and controls fluid into and out from chamber 182. Control port B is connected to fluid chamber 190. It controls the flow of fluid into and out from chamber 190. Control port C is connected to fluid chamber 282. It controls fluid into and out from chamber 282. Control port D is connected to each of chambers 186, 196, 280. It controls fluid into and out from chambers 186, 196, 280.

Any type of mechanism may be used for controlling the ports A, B, C, D. Control ports A, B, C, D may be ports in valves having two (pressure and return) or three (pressure, return and block) positions. The movement between these positions may be controlled by a computer, may be controlled mechanically, may be controlled by a timer circuit, or by pilot valves operated mechanically, electrically or by fluid pressure signals. The particular system for controlling the operation of the control ports A, B, C, D is not a part of this invention. The sequence of operations of control ports A, B, C, D is a part of the invention.

Let it be assumed that the hydraulic unit 100 is being used to power three drive beams of a reciprocating floor conveyor. Let it also be assumed that all three drive sections I, II, III are in the position shown in Fig. 14 and it is desired to move them simultaneously or in unison to the left as illustrated. This is simply done by connecting ports A, B, C to pressure and port D to return. Pressure enters all three chambers 182, 190, 282 while chambers 186, 194, 280 are connected to return pressure. In response, the three cylinder bodies 110, 112, 114 will be shifted to the left, as illustrated. When the three cylinder bodies 110, 112, 114 are in the new position, and it is desired to return them sequentially, this is also easily done. Port D is connected to pressure, ports A and B are either also connected to pressure or are blocked, and port C is connected to return. As will readily be apparent, cylinder body 114 will be moved to the right while cylinder bodies 110, 112 will be prevented from movement. Next, while pressure is maintained at port D, and pressure is also maintained at port A, or port A is retained in a block condition, port B is connected to return. This results in cylinder body 112 moving to the right while cylinder body 110 is prevented from movement. Then, while maintaining pressure at port D, port A is connected to return. In response, cylinder body 110 moves to the right.

The ports A, B, C, D can also be operated to cause a total reverse movement of the drive unit 100. Assume that all of the cylinder bodies 110, 112, 114 are shifted to the right from the position shown in Fig. 14. Assume also that it is desired to move them in unison toward the left. This is simply done by connecting port D to pressure while connecting ports A, B, C to return. Chambers 186, 194, 280 are all connected to pressure while chambers 182, 190, 282 are all connected to return. As a result, all three cylinder bodies 110, 112, 114 are moved from a full left position over to a full right position. Sequential return of the cylinder bodies 110, 112, 114 is achieved in the following manner. Port A is connected to pressure and port D is connected to return. Ports B and C are either blocked or connected to return. As a result, cylinder body 110 moves by itself to the left. Next, pressure is delivered to port B while port D is connected to return and port C is either blocked or connected to return. In response, cylinder body 112 is moved to the left while cylinder body 114 stays at rest. Next, pressure is delivered to port C while port D is connected to return. In response, cylinder body 114 is moved to the left.

It is to be understood that the illustrated embodiment is presented primarily by way of example. The constructural details and arrangements of many of the parts can vary. For example, the closure plug 138 could be replaced by a screw-in plug or an end piece could be welded onto the second end of the piston rod 102. Also, the number of drive sections may be increased. Accordingly, the scope of protection is not to be limited by the disclosed examples, but is to be determined solely by the following claims.

## Claims

1. A hydraulic drive unit (10) comprising
an elongated piston rod (12) having first and second ends and a hollow interior;
characterized by at least three piston heads (22,24,26) spaced apart along the piston rod (12) and fixed in position on the piston rod;
a cylinder body (28,30,32 resp.) for each piston head (22,24,26), each said cylinder body being mounted to reciprocate back and forth on said piston rod, relative to its piston head, each said cylinder body and its piston head together defining first and second variable volume fluid chambers (40,42 44 resp.), separated by the piston head, with said first fluid chambers being located on a common side of the piston heads and said second fluid chambers being located on the opposite side of the piston heads; and
a fluid delivery (48) and return passageway (50) for each fluid chamber.

2. A hydraulic drive unit, according to claim 1, comprising:
a tubular piston rod (12) with a hollow interior;
a separate fluid delivery (48) and return tube (50) for each first fluid chamber, said tubes extending through said hollow interior of the piston rod, each said tube having an inner end positioned to communicate with its first fluid chamber and an outer end adjacent the first end of the piston rod;
said hollow interior of said piston rod defining a passage space between and around said tubes; and
said piston rod (12) including fluid delivery and return passages which connect said passage space of its hollow interior with each of the second fluid chambers.

3. A hydraulic drive unit according to claim 2, wherein said piston rod (12) is a continuous one-piece tubular member.

4. A hydraulic drive unit according to claim 3, wherein each piston head includes an annular body which surrounds and is connected to the piston rod.

5. A hydraulic drive unit according to claim 4, wherein the annular bodies of the piston heads are thread-connected to the piston rod.

6. A hydraulic drive unit according to claim 5, wherein said annular bodies are thread-connected to the piston rod.

7. A hydraulic drive unit according to claim 6, comprising three piston heads (104,106,108), wherein said tubular piston rod (102) includes a first section of threads (152) by which it is connected to the annular body of a center one of said piston heads, said piston rod having an outside diameter (136) in its extent from said threaded section toward the first end of the piston rod of a size such that the annular body of the center head (104) can be installed at the first end of the piston rod and moved along the reduced diameter portion of the piston rod to said first section of threads (152), said piston rod including a second section of threads (154) located between said first section of threads and the first end (128) of the piston rod, for making threaded engagement with the annular body of a second of said three piston heads (106), and said piston rod in its extent between the first end of the piston rod and the second section of threads (154), having an outside diameter of a size such that the second annular body (106) can be placed onto the first end of the piston rod and slid along the piston rod to said second section of threads, and said piston rod including a third section of threads (156) positioned between the first section of threads and the second end (130) of the piston rod, and said piston rod in its extent between the third section of threads (156) and the second end of the piston rod including an outside diameter of a size to allow the annular body (158) of the third piston head (108) to be inserted onto the second end (130) of the tubular piston rod and slid along the tubular piston rod to the third section of threads (156).

8. A hydraulic drive unit according to claim 2, comprising a support (256) at the first end of the piston rod for supporting the tubes (176,184,192) in a spaced-apart relationship, and means endwise outwardly of said support (256) establishing a separate port (268,270,272) in communication with the outer end of each of said tubes (176,184,192), and an additional separate port (274) in communication with the passage space (108) in the hollow interior (132) of the piston rod. (102).

9. A hydraulic drive unit according to claim 8, wherein said piston rod includes a spherical ball (244) at its first end and said ports (268,270,272) are located within said spherical ball, said spherical ball (244) being adapted to be received within a socket (284) which includes a separate fluid passageway (286,288,290,292) in communication with each of said ports.

10. A reciprocating floor-type conveyor having at least three sets of floor slat members (14) which are mounted adjacent to each other for longitudinal reciprocation, and a plurality of transverse drive beams (16,18,20), one for each set of floor slat members, each transverse drive beam including means for connecting it to its set of floor slat members, having a hydraulic drive unit according to any one of the preceding claims, the hydraulic drive being connected to the transverse drive beams, characterized by
the elongated piston rod (12) extending parallel to the floor slat members (14) and perpendicular to the transverse drive beams (16,18,20), at a location offset below the transverse drive beams,
the plurality of piston heads (22,24,26), one for each transverse drive beam, being spaced apart along the piston rod and fixed in position on the piston rod,
each cylinder (28,30,32) for each piston head being mounted to reciprocate back and forth on said piston rod (12) relative to its piston head, each said cylinder and its piston head together defining first (34,36,38) and second variable volume chambers (40 42,44), one axially endwise from each end of the piston head,
said piston heads (22,24,26) and cylinders (28,30,32) being positioned to place each cylinder at least closely below a related one of the transverse drive beams,
means for connecting each cylinder to its transverse drive beam; and
wherein in use the transverse drive beams (16,18,20) are moved by said cylinders back and forth along the piston rod.

11. Reciprocating floor-type conveyor according to claim 10, wherein the first variable volume chamber (34,36,38) of each cylinder is connected in parallel with a first hydraulic line (48), wherein a second hydraulic line (50) is directly connected to the second chamber of an end cylinder, wherein a flexible conduit (57) extends from the second chamber of said end cylinder to the second chamber of the next or second cylinder, wherein a second flexible conduit (54) extends from the second chamber of the second cylinder to the second chamber of the next or third cylinder, wherein a first check valve (56) is located in series between the first flexible conduit and the second chamber of the first cylinder, wherein a second check valve (58) is located in series between the second flexible conduit (54) and the second chamber of the second cylinder, wherein the first check valve (56) is constructed to open in response to pressure in the second chamber of the first cylinder, and the second check valve (58) is constructed to open in response to pressure in the second chamber of the second cylinder (30), wherein said first check valve (56) includes means (60) responsive to movement of the first cylinder, caused by fluid pressure introduction into its first chamber and exhausting of fluid pressure out from its second chamber, to an end position, for opening the first check valve (56) and allowing fluid pressure to flow from the second chamber (42) of the second cylinder (30), through the first check valve (56), then through the second chamber of the first cylinder (56) to the second hydraulic line, and wherein said second check valve (58) includes means (60) responsive to movement of the second cylinder (30), caused by pressure fluid introduction into its first chamber and fluid exhausting out from its second chamber, to an end position, for opening the second check valve (58) and allowing fluid in the second chamber of the third cylinder to flow through the second conduit, then through the second check valve (58), then through the first conduit (52), then through the first check valve (56), then through the second chamber of the first cylinder, onto the second hydraulic line (50).

12. Reciprocating floor-type conveyor according to claim 11, wherein the first (52) and second conduits (54) are flexible hoses of sufficient length to allow for the necessary movement of the hydraulic cylinders during movement of the cylinders.

13. Reciprocating floor-type conveyor according to claim 11, wherein the first (48) and second hydraulic lines (50) are located inside of the elongated piston rod.

14. Reciprocating floor-type conveyor according to claim 13, wherein the elongated piston rod (12) has a mounting ball (62) at one end and the first and second hydraulic lines extend through said mounting ball (62).

15. Reciprocating floor-type conveyor according to claim 14, further comprising a mounting socket (64,66,68) for said ball, said ball (62) and socket providing a pivot joint at the ball end of the piston rod.

16. Reciprocating floor-type conveyor according to claim 15, comprising frame means at the end of the piston rod (12) opposite the ball (62) for restraining movement of the piston rod (12) sideways and up and down, but permitting endwise movement of the piston rod (12).

17. Reciprocating floor-type conveyor according to claim 10, comprising a transverse frame member (82,84) at each end of the piston rod (12), and a pair of longitudinal frame members (96,98), one on each side of the piston rod, rigidly interconnected between the end frame members (82,84), to form a frame structure, and means connecting at least one end of the piston rod (12) to the frame structure.

18. Reciprocating floor-type conveyor according to claim 10, comprising a mounting frame for the elongated piston rod (12), said elongated piston rod (12) including a ball member (12) at one end, said mounting frame including socket means engaging said ball to provide a ball and socket joint which defines a pivotal connection at such end of the piston rod.

19. Reciprocating floor-type conveyor according to claim 18, comprising frame means (82,84) at the opposite end of the piston rod (12) for restraining sideways and up and down movement of the piston rod, but permitting endwise movement of the piston rod relative to the frame means.

20. Reciprocating floor-type conveyor according to claim 10, comprising:
a tubular piston rod (12) with a hollow interior;
a separate fluid delivery (48) and return tube (50) for each first fluid chamber, said tubes extending through said hollow interior of the piston rod (12), each said tube having an inner end positioned to communicate with its first fluid chamber (34,36,38) and an outer end adjacent the first end of the piston rod;
said hollow interior of said piston rod defining a passage space between and around said tubes; and
said piston rod including fluid delivery and return passages which connect said passage space of its hollow interior with each of the second fluid chambers (40,42,44).

21. Reciprocating floor-type conveyor according to claim 20, wherein said piston rod (12) is a continuous one-piece tubular member.

22. Reciprocating floor-type conveyor according to claim 21, wherein each piston head includes an annular body which surrounds and is connected to the piston rod (12).

23. Reciprocating floor-type conveyor according to claim 22, wherein the annular bodies of the piston heads are thread connected to the piston rod (12).

## Patentansprüche

1. Hydraulische Antriebseinheit (10) mit einer langgestreckten Kolbenstange (12) mit einem ersten und einem zweiten Ende sowie einem hohlen Inneren, dadurch gekennzeichnet, daß mindestens drei Kolbenköpfe (22, 24, 26) entlang der Kolbenstange (12) im Abstand zueinander angeordnet sind und in ihrer Position an der Kolbenstange fixiert sind;
einem Zylinderkörper (28 bzw. 30 bzw. 32) für jeden der Kolbenköpfe (22, 24, 26) wobei jeder der Zylinderkörper derart montiert ist, daß er sich vorwärts und rückwärts auf der Kolbenstange relativ zu seinem Kolbenkopf hin- und herbewegen kann, wobei jeder Zylinderkörper zusammen mit seinem Kolbenkopf eine erste und zweite Flüssigkeitskammer (40 bzw. 42 bzw. 44) mit veränderbarem Volumen ausbilden, welche durch den jeweiligen Kolbenkopf voneinander getrennt sind, wobei die ersten Flüssigkeitskammern auf einer gemeinsamen Seite der Kolbenköpfe angeordnet sind und die zweiten Flüssigkeitskammern auf der gegenüberliegenden Seite der Kolbenköpfe angeordnet sind; und
einem Flüssigkeits-Zuführkanal (48) und einem Flüssigkeits-Rückführkanal (50) für jede der Flüssigkeitskammern.

2. Hydraulische Antriebseinheit nach Anspruch 1, mit:
einer rohrförmigen Kolbenstange (12) mit einem hohlen Inneren;
einem separaten Flüssigkeits-Zuführ- (48) und Flüssigkeits-Rückführrohr (50) für jede der ersten Flüssigkeitskammern, wobei die Rohre sich durch das hohle Innere der Kolbenstange erstrecken, wobei jedes der Rohre ein inneres Ende aufweist, welches derart angeordnet ist, daß es mit der jeweiligen ersten zugehörigen Flüssigkeitskammer verbunden ist, und ein äußeres Ende aufweist, welches sich in der Nähe des ersten Endes der Kolbenstange befindet;
wobei das hohle Innere der Kolbenstange einen Durchgangsraum zwischen und um die Rohre herum ausbildet; und
wobei die Kolbenstange (12), welche den Flüssigkeits-Zuführkanal und Flüssigkeits-Rückführkanal aufweist, den Durchgangsraum ihres hohlen Inneren mit jeder der zweiten Flüssigkeitskammern verbindet.

3. Hydraulische Antriebseinheit nach Anspruch 2, wobei die Kolbenstange (12) ein kontinuierlich durchlaufendes einstückiges Rohrteil ist.

4. Hydraulische Antriebseinheit nach Anspruch 3, wobei jeder Kolbenkopf einen Ringkörper aufweist, welcher die Kolbenstange umhüllt und mit dieser verbunden ist.

5. Hydraulische Antriebseinheit nach Anspruch 4, wobei die Ringkörper der Kolbenköpfe durch Aufschrauben mit der Kolbenstange verbunden sind.

6. Hydraulische Antriebseinheit nach Anspruch 5, wobei die Ringkörper durch Aufschrauben mit der Kolbenstange verbunden sind.

7. Hydraulische Antriebseinheit nach Anspruch 6, welche mit drei Kolbenköpfen (104, 106, 108) versehen ist, wobei die rohrförmige Kolbenstange (102) einen ersten Gewindeabschnitt (152) aufweist, mittels welchem sie mit dem Ringkörper eines mittleren der Kolbenköpfe verbunden ist, wobei die Kolbenstange einen Außendurchmesser (136) aufweist, welcher in seiner Verlängerung von dem Gewindeabschnitt in Richtung zu dem ersten Ende des Kolbenstange derart dimensioniert ist, daß der Ringkörper des mittleren Kopfes (104) an dem ersten Ende der Kolbenstange montiert werden kann und entlang dem Abschnitt mit verringertem Durchmesser der Kolbenstange zu dem ersten Gewindeabschnitt (152) hinbewegt werden kann, wobei die Kolbenstange einen zweiten Gewindeabschnitt (154) aufweist, welcher zwischen dem ersten Gewindeabschnitt und dem ersten Ende (128) der Kolbenstange angeordnet ist, um mit dem ersten Ringkörper eines zweiten (106) von drei Kolbenköpfen durch Verschrauben in Eingriff gebracht werden zu können, und die Kolbenstange in ihrer Erstreckung zwischen dem ersten Ende der Kolbenstange und dem zweiten Gewindeabschnitt (154) einen derart dimensionierten Außendurchmesser aufweist, daß der zweite Ringkörper (106) auf dem ersten Ende der Kolbenstange angeordnet werden kann und entlang der Kolbenstange zu dem zweiten Gewindeabschnitt geschoben werden kann, und wobei die Kolbenstange einen dritten Gewindeabschnitt (156) aufweist, welcher zwischen dem ersten Gewindeabschnitt und dem zweiten Ende (130) der Kolbenstange angeordnet ist, und die Kolbenstange in ihrer Erstreckung zwischen dem dritten Gewindeabschnitt (156) und dem zweiten Ende der Kolbenstange eine derart dimensionierten Außendurchmesser aufweist, daß der Ringkörper (158) des dritten Kolbenkopfs (108) auf das zweite Ende (130) der Kolbenstange aufgeschoben werden kann und entlang der rohrförmigen Kolbenstange zu dem dritten Gewindeabschnitt (156) hingeschoben werden kann.

8. Hydraulische Antriebseinheit nach Anspruch 2, welche versehen ist mit einem Stützteil (256) an dem ersten Ende der Kolbenstange zum Stützen der Rohre (176, 184, 192) im Abstand zueinander, und einer Einrichtung, welche sich außerhalb des Stützteils (256) zum Ende hin erstreckt und voneinander getrennte Durchgänge (268, 270, 272) ausbildet, welche mit den äußeren Enden der Rohre (176, 184, 192) verbunden sind, und mit einem zusätzlichen Durchgang (274) versehen ist, welcher mit einem Durchgangsraum (108) verbunden ist, welcher in dem hohlen Inneren (132) der Kolbenstange (102) ausgebildet ist.

9. Hydraulische Antriebseinheit nach Anspruch 8, wobei die Kolbenstange eine Kugel (244) an ihrem ersten Ende aufweist und die Durchgänge (268, 270, 272) innerhalb der Kugel angeordnet sind, wobei die Kugel (244) derart ausgebildet ist, daß sie innerhalb einer Buchse (284) aufgenommen werden kann, welche einen separaten Flüssigkeits-Durchgangskanal (286, 288, 290, 292) aufweist, welcher mit jedem der vorgenannten Durchgänge in Verbindung steht.

10. Bodenförderer zum Durchführen einen Hin- und Herbewegung mit mindestens drei Sätzen von Bodenleistenteilen (14), welche aneinander angrenzend montiert sind, um sich in Längsrichtung hin- und herbewegen zu können, und einer Mehrzahl von Quer-Antriebsträgern (16, 18, 20), wovon einer für jeden Satz von Bodenleistenteilen vorgesehen ist, jeder Quer-Antriebsträger eine Einrichtung aufweist, um diesen mit seinem jeweiligen Satz von Bodenleistenteilen zu verbinden, und wobei eine hydraulische Antriebseinheit nach einem der vorangehenden Ansprüche vorgesehen ist, welche mit den Quer-Antriebsträgern verbunden ist, gekennzeichnet durch die langgestreckte Kolbenstange (12), welche sich parallel zu den Bodenleistenteilen (14) und senkrecht zu den Quer-Antriebsträgern (16, 18, 20) in einer gegenüber diesen nach unten versetzten Position erstreckt,
wobei die Mehrzahl von Kolbenköpfen (22, 24, 26), wovon für jeden Quer-Antriebsträger einer vorgesehen ist, entlang der Kolbenstange im Abstand zueinander angeordnet sind und in ihrer jeweiligen Position an der Kolbenstange fixiert sind, jeder Zylinder (28, 30, 32) für jeden Kolbenkopf derart montiert ist, daß er sich auf der Kolbenstange (12) relativ zu dem Kolbenkopf vor- und zurückbewegen kann, wobei jeder der Zylinder zusammen mit dem jeweiligen Kolbenkopf eine erste (34, 36, 38) und eine zweite in ihrem Volumen veränderbare Kammer (40, 42, 44) ausbildet, wovon sich jeweils eine axial endweise von dem jeweiligen Ende des Kolbenkopfs befindet, wobei die Kolbenköpfe (22, 24, 26) und Zylinder (28, 30, 32) derart positioniert sind, daß jeder Zylinder zumindest nahe unterhalb eines jeweils zugehörigen der Quer-Antriebsträger angeordnet ist, Einrichtungen zum Verbinden von jedem der Zylinder mit dem jeweiligen Quer-Antriebsträger; und wobei während des Betriebs die Quer-Antriebsträger (16, 18, 20) mittels der Zylinder entlang der Kolbenstange vor- und zurückbewegt werden.

11. Bodenförderer für eine Hin- und Herbewegung nach Anspruch 10, wobei die ersten Kammern (34, 36, 38) mit veränderbarem Volumen von jedem Zylinder in Parallelschaltung mit einer ersten Hydraulikleitung (48) verbunden sind, wobei eine zweite Hydraulikleitung (50) direkt mit der zweiten Kammer eines Endzylinders verbunden ist, wobei eine flexible Leitung (57) sich von der zweiten Kammer des Endzylinders zu der zweiten Kammer des nächsten oder zweiten Zylinders erstreckt, wobei eine zweite flexible Leitung (54) sich von der zweiten Kammer des zweiten Zylinders zu der zweiten Kammer des nächsten oder dritten Zylinders erstreckt, wobei ein erstes Rückschlagventil (56) in Reihe zwischen der ersten flexiblen Leitung und der zweiten Kammer des ersten Zylinders angeordnet ist, wobei ein zweites Rückschlagventil (58) in Reihe zwischen der zweiten flexiblen Leitung (54) und der zweiten Kammer des zweiten Zylinders angeordnet ist, wobei das erste Rückschlagventil (56) derart konstruiert ist, daß es sich aufgrund eines in der zweiten Kammer des ersten Zylinders herrschenden Drucks öffnet, und das zweite Rückschlagventil (58) derart konstruiert ist, daß es sich aufgrund eines in der zweiten Kammer des zweiten Zylinders (30) herrschenden Drucks öffnet, wobei das erste Rückschlagventil (56) eine Einrichtung (60) aufweist, welche auf eine Bewegung des ersten Zylinders in eine Endposition reagiert, welche durch das Einführen von Flüssigkeitsdruck in dessen erste Kammer und Herausführen von Flüssigkeitsdruck aus dessen zweiter Kammer hervorgerufen wird, um das erste Rückschlagventil (56) zu öffnen und es so zu ermöglichen, daß Flüssigkeitsdruck von der zweiten Kammer (42) des zweiten Zylinders (30) durch das erste Rückschlagventil (56) strömt und dann durch die zweite Kammer des ersten Zylinders (56) zu der zweiten Hydraulikleitung strömt, wobei das zweite Rückschlagventil (58) eine Einrichtung (60) aufweist, welche auf die Bewegung des zweiten Zylinders (30) in eine Endposition reagiert, wobei die Bewegung durch Einführen von Flüssigkeitsdruck in dessen erste Kammer und Herausführen von Flüssigkeitsdruck aus dessen zweiter Kammer hervorgerufen wird, um das zweite Rückschlagventil (58) zu öffnen und es zu ermöglichen, daß Flüssigkeit in die zweite Kammer des dritten Zylinders durch die zweite Leitung hindurchströmen kann und dann durch das zweite Rückschlagventil (58) und dann durch die erste Leitung (52) und dann durch das erste Rückschlagventil (56) und dann durch die zweite Kammer des ersten Zylinders in die zweite Hydraulikleitung (50) strömen kann.

12. Bodenförderer für eine Hin- und Herbewegung nach Anspruch 11, wobei die erste (52) und zweite (54) Leitung flexible Schläuche mit ausreichender Länge sind, um die notwendige Bewegungsfreiheit für die Hydraulikzylinder während der Bewegung der Zylinder zu gestatten.

13. Bodenförderer für eine Hin- und Herbewegung nach Anspruch 11, wobei die erste (48) und zweite (50) Hyraulikleitung im Inneren der langgestreckten Kolbenstange angeordnet sind.

14. Bodenförderer für eine Hin- und Herbewegung nach Anspruch 13, wobei die langgestreckte Kolbenstange (12) mit einer Kupplungskugel (62) an ihrem einen Ende versehen ist und die erste und zweite Hydraulikleitung sich durch Kupplungskugel (62) erstreckt.

15. Bodenförderer für eine Hin- und Herbewegung nach Anspruch 14, welcher weiter versehen ist mit einer Montagebuchse (64, 66, 68) zum Aufnehmen der Kugel, wobei die Kugel (62) und die Buchse ein Gelenk an dem Kugelende der Kolbenstange ausbilden.

16. Bodenförderer für eine Hin- und Herbewegung nach Anspruch 15, welcher mit einer Rahmeneinrichtung an dem der Kugel (62) gegenüberliegenden Ende der Kolbenstange (12) versehen ist, um eine Bewegung der Kolbenstange (12) in seitlicher Richtung sowie nach oben und unten zu verhindern, jedoch eine endweise Axialbewegung der Kolbenstange (12) zu ermöglichen.

17. Bodenförderer für eine Hin- und Herbewegung nach Anspruch 10, welcher mit einem Quer-Rahmenteil (82, 84) an jedem der Enden der Kolbenstange (12) versehen ist und ein Paar von sich in Längsrichtung erstreckenden Rahmenteilen (96, 98) aufweist, welche sich auf jeder Seite der Kolbenstange erstrecken und fest zwischen den Endrahmenteilen (82, 84) verbunden sind, um eine Rahmenstruktur auszubilden, und eine Einrichtung vorgesehen ist, welche zumindest ein Ende der Kolbenstange (12) mit der Rahmenstruktur verbindet.

18. Bodenförderer für eine Hin- und Herbewegung nach Anspruch 10, welcher versehen ist mit einem Montagerahmen für die langgestreckte Kolbenstange (12) wobei die langgestreckte Kolbenstange (12) ein Kugelelement (12) an ihrem einen Ende aufweist, wobei der Montagerahmen eine Buchseneinrichtung aufweist, welche sich mit der Kugel im Eingriff befindet, um ein Kugel-Buchsen-Gelenk auszubilden, welches eine gelenkige Verbindung an diesem Ende der Kolbenstange bildet.

19. Bodenförderer für eine Hin- und Herbewegung nach Anspruch 18, wobei dieser eine Rahmeneinrichtung (82, 84) an den gegenüberliegenden Enden der Kolbenstange (12) aufweist, um eine seitliche und eine Hoch- und Runterbewegung der Kolbenstange zu verhindern, jedoch eine endweise Axialbewegung der Kolbenstange relativ zu der Rahmeneinrichtung zu gestatten.

20. Hydraulische Antriebseinheit nach Anspruch 10, mit: einer rohrförmigen Kolbenstange (12) mit einem hohlen Inneren;
einem separaten Flüssigkeits-Zuführ- (48) und Flüssigkeits-Rückführrohr (50) für jede der ersten Flüssigkeitskammern, wobei die Rohre sich durch das hohle Innere der Kolbenstange erstrecken, wobei jedes der Rohre ein inneres Ende aufweist, welches derart angeordnet ist, daß es mit der jeweiligen ersten zugehörigen Flüssigkeitskammer (34, 36, 38) verbunden ist, und ein äußeres Ende aufweist, welches sich in der Nähe des ersten Endes der Kolbenstange befindet;
wobei das hohle Innere der Kolbenstange einen Durchgangsraum zwischen und um die Rohre herum ausbildet; und
wobei die Kolbenstange, welche den Flüssigkeits-Zuführkanal und Flüssigkeits-Rückführkanal aufweist, den Durchgangsraum ihres hohlen Inneren mit jeder der zweiten Flüssigkeitskammern (40, 42, 44) verbindet.

21. Hydraulische Antriebseinheit nach Anspruch 20, wobei die Kolbenstange (12) ein kontinuierlich durchlaufendes einstückiges Rohrteil ist.

22. Hydraulische Antriebseinheit nach Anspruch 21, wobei jeder Kolbenkopf einen Ringkörper aufweist, welcher die Kolbenstange (12) umhüllt und mit dieser verbunden ist.

23. Hydraulische Antriebseinheit nach Anspruch 22, wobei die Ringkörper der Kolbenköpfe durch Aufschrauben mit der Kolbenstange (12) verbunden sind.

## Revendications

1. Ensemble d'entraînement hydraulique (10) comprenant une tige de piston allongée (12) ayant une première et une seconde extrémités et un espace intérieur creux;
caractérisé en ce qu'il comprend au moins trois têtes de piston (22,24,26) espacées le long de la tige de piston (12) et fixées en position sur cette dernière;
un cylindre (28,30,32) pour chaque tête de piston (22,24,26), chaque cylindre étant monté de manière à pouvoir effectuer un mouvement alternatif en arrière et en avant sur la tige de piston, par rapport à sa tête de piston, chaque cylindre et sa tête de piston délimitant ensemble une première et une seconde chambres à fluide de volume variable (40,42,44) séparées par la tête de piston, les premières chambres à fluide étant situées sur le même côté des têtes de piston et les secondes chambres à fluide étant situées sur le côté opposé des têtes de piston; et
un conduit de distribution de fluide (48) et un conduit de retour de fluide (50) pour chaque chambre à fluide.

2. Ensemble d'entraînement hydraulique suivant la revendication 1, caractérisé en ce qu'il comprend:
une tige de piston tubulaire (12) creuse intérieurement;
un tube distinct (48) de distribution de fluide et un tube distinct (50) de retour de fluide pour chaque première chambre à fluide, ces tubes s'étendant à travers l'espace intérieur creux de la tige de piston, chacun de ces tubes ayant une extrémité interne positionnée de façon à communiquer avec la première chambre à fluide et une extrémité externe adjacente à une première extrémité de la tige de piston;
l'espace intérieur creux de la tige de piston délimitant un passage entre lesdits tubes et autour de ceux-ci; et
la tige de piston (12) comprenant des passages de distribution et de retour de fluide qui relient ledit passage de son espace intérieur creux à chacune des secondes chambres à fluide.

3. Ensemble d'entraînement hydraulique suivant la revendication 2, caractérisé en ce que la tige de piston (12) est un organe tubulaire continu d'une seule pièce.

4. Ensemble d'entraînement hydraulique suivant la revendication 3, caractérisé en ce que chaque tête de piston comprend un corps annulaire qui entoure la tige de piston et est relié à celle-ci;

5. Ensemble d'entraînement hydraulique suivant la revendication 4, caractérisé en ce que les corps annulaires des têtes de piston sont vissés sur la tige de piston.

6. Ensemble d'entraînement hydraulique suivant la revendication 5, caractérisé en ce que les corps annulaires sont vissés sur la tige de piston.

7. Ensemble d'entraînement hydraulique suivant la revendication 6, caractérisé en ce qu'il comprend trois têtes de piston (104,106,108), et dans lequel la tige de piston tubulaire (102) comprend un premier filetage (152) au moyen duquel elle est reliée au corps annulaire de l'une des têtes de piston, située au milieu, la tige de piston ayant un diamètre externe (136) dans sa partie s'étendant depuis ladite portion filetée vers la première extrémité de la tige de piston, d'une dimension telle que le corps annulaire de la tête de piston (104) située au milieu peut être disposé à la première extrémité de la tige de piston et déplacé le long de la partie de diamètre réduit de la tige jusqu'au premier filetage (152), la tige de piston comprenant un second filetage (154) situé entre le premier filetage et la première extrémité (128) de la tige de piston afin de venir en prise par vissage avec le corps annulaire d'une seconde tête de piston (106) des trois têtes, et la tige de piston ayant dans sa portion s'étendant entre la première extrémité de la tige et le second filetage (154), un diamètre externe tel que le second corps annulaire (106) peut être disposé sur la première extrémité de la tige de piston et peut glisser le long de cette dernière jusqu'au second filetage, la tige de piston comprenant un troisième filetage (156) situé entre le premier filetage et la seconde extrémité (130) de la tige de piston, cette dernière ayant, dans sa partie s'étendant entre le troisième filetage (156) et la seconde extrémité de la tige de piston, un diamètre externe tel qu'il permet d'introduire le corps annulaire (158) de la troisième tête de piston (108) sur la seconde extrémité (130) de la tige de piston tubulaire et de la faire coulisser le long de cette dernière jusqu'au troisième filetage (156).

8. Ensemble d'entraînement hydraulique suivant la revendication 2, comprenant un support (256) à la première extrémité de la tige de piston afin de soutenir les tubes (176,184,192) dans une relation d'espacement mutuel, et des moyens d'extrémité à l'extérieur dudit support (256) formant un orifice séparé (268,270,272) qui communique avec l'extrémité externe de chacun des tubes (176,184,192), et un orifice séparé supplémentaire (274) qui communique avec le passage de l'espace intérieur creux (132) de la tige de piston (102).

9. Ensemble d'entraînement hydraulique suivant la revendication 8, caractérisé en ce que la tige de piston comprend une tête sphérique (244) à sa première extrémité, lesdits orifices (268,270,272) étant situés dans ladite tête sphérique, cette tête sphérique (244) étant adaptée à être reçue dans une douille (284) qui comprend un passage séparé de fluide (286,288,290,292) qui communique avec chacun desdits orifices.

10. Transporteur du type à plateaux à mouvement alternatif ayant au moins trois jeux d'éléments de plateaux (14) qui sont montés adjacents les uns aux autres afin d'effectuer un mouvement longitudinal de va-et-vient, et plusieurs organes d'entraînement transversaux (16,18,20), un pour chaque série d'éléments de plateaux, chaque organe d'entraînement transversal comprenant des moyens pour le relier à sa série d'éléments de plateaux, et ayant un ensemble d'entraînement hydraulique suivant l'une quelconque des revendications précédentes, le dispositif d'entraînement hydraulique étant relié aux organes d'entraînement transversaux, caractérisé en ce que:
la tige de piston allongée (12) s'étend parallèlement aux éléments de plateaux (14) et perpendiculairement aux organes d'entraînement transversaux (16,18,20), dans une position décalée au-dessous des organes d'entraînement transversaux,
ladite pluralité de têtes de piston (22,24,26), une pour chaque organe d'entraînement transversal, est espacée le long de la tige de piston et fixée en place sur cette dernière,
chaque cylindre (28,30,32) pour chaque tête de piston est monté de façon à effectuer un mouvement alternatif d'arrière en avant sur la tige de piston (12) par rapport à sa tête de piston, chaque cylindre et sa tête de piston délimitant ensemble des premières chambres à volume variable (34,36,38) et des secondes chambres à volume variable (40,42,44), qui s'étendent axialement vers l'extrémité à partir de chaque côté des têtes de piston,
les têtes de piston (22,24,26) et les cylindres (28,30,32) sont positionnés de façon à placer chaque cylindre immédiatement au-dessous d'un organe d'entraînement transversal respectif,
des moyens sont prévus pour relier chaque cylindre à son organe d'entraînement transversal; et
dans lequel les organes d'entraînement transversaux (16,18,20) sont déplacés, en fonctionnement, par lesdits cylindres, en arrière et en avant le long de la tige de piston.

11. Transporteur à plateaux à mouvement alternatif suivant la revendication 10, dans lequel la première chambre à volume variable (34,36,38) de chaque cylindre est reliée en parallèle à un premier conduit hydraulique (48), et dans lequel un second conduit hydraulique (50) est relié directement à la seconde chambre d'un cylindre d'extrémité, un conduit souple (57) s'étendant depuis la seconde chambre dudit cylindre d'extrémité à la seconde chambre du cylindre suivant, ou second cylindre, un second conduit souple (54) s'étendant de la seconde chambre du second cylindre à la seconde chambre du cylindre suivant, ou troisième cylindre, un premier clapet de retenue (56) étant disposé en série entre le premier conduit souple et la seconde chambre du premier cylindre, un second clapet de retenue (58) étant disposé en série entre le second conduit souple (54) et la seconde chambre du second cylindre, le premier clapet de retenue (56) étant apte à s'ouvrir en réponse à une pression dans la seconde chambre du premier cylindre, et le second clapet de retenue (58) étant adapté à s'ouvrir en réponse à une pression dans la seconde chambre du seconde cylindre (30), le premier clapet de retenue (56) comprenant des moyens (60) sensibles au déplacement du premier cylindre, provoqué par l'introduction d'un fluide sous pression dans sa première chambre et faisant échapper le fluide sous pression de la seconde chambre, vers une position d'extrémité, pour ouvrir la première soupape de retenue (56) et permettre au fluide sous pression de s'écouler de la seconde chambre (42) du second cylindre (30), à travers le premier clapet (56), et ensuite à travers la seconde chambre du premier cylindre (56) vers le second conduit hydraulique, et le second clapet de retenue (58) comprenant des moyens (60) sensibles au déplacement du second cylindre (130), provoqué par l'introduction d'un fluide sous pression dans sa première chambre et faisant échapper le fluide de sa seconde chambre, vers une position d'extrémité, afin d'ouvrir le second clapet de retenue (58) et permettre au fluide se trouvant dans la seconde chambre du troisième cylindre de s'écouler à travers le second conduit, puis à travers le second clapet (58) et ensuite à travers le premier conduit (52), puis à travers le premier clapet de retenue (56) et enfin à travers la seconde chambre du premier cylindre dans le second conduit hydraulique (50).

12. Transporteur à plateaux à mouvement alternatif suivant la revendication 11, dans lequel le premier et le second conduits (52,54) sont des tuyaux souples d'une longueur suffisante pour permettre le déplacement nécessaire des vérins hydrauliques pendant le déplacement des cylindres.

13. Transporteur à plateaux à mouvement alternatif suivant la revendication 11, dans lequel le premier et le second conduits hydrauliques sont disposés à l'intérieur de la tige de piston allongée.

14. Transporteur à plateaux à mouvement alternatif suivant la revendication 13, dans lequel la tige de piston allongée (12) comporte une tête sphérique de montage (62) à une extrémité et dans lequel le premier et le second conduits hydrauliques s'étendent à travers ladite tête sphérique de montage (62).

15. Transporteur à plateaux à mouvement alternatif suivant la rfevendication 14, caractérisé en ce qu'il comprend en outre une douille de montage (64,66,68) pour ladite tête sphérique, la tête sphérique (62) et la douille constituant un joint à rotule à l'extrémité de la tige de piston portant la tête sphérique.

16. Transporteur à plateaux à mouvement alternatif suivant la revendication 15, caractérisé en ce qu'il comprend un bâti à l'extrémité de la tige de piston (12), en face de la tête sphérique (62), afin de limiter le déplacement de la tige de piston (12) latéralement et vers le haut et vers le bas, mais en permettant un déplacement de la tige de piston (12) dans le sens longitudinal.

17. Transporteur à plateaux à mouvement alternatif suivant la revendication 10, caractérisé en ce qu'il comprend un élément transversal de bâti (82,84) à chaque extrémité de la tige de piston (12), et deux éléments longitudinaux de bâti (96,98), un sur chaque côté de la tige de piston, qui sont reliés rigidement entre les éléments d'extrémité (82,84) du bâti afin de former une ossature de bâti, et des moyens reliant au moins une extrémité de la tige de piston (12) à l'ossature de bâti.

18. Transporteur à plateaux à mouvement alternatif suivant la revendication 10, comprenant un bâti de montage pour la tige de piston allongé (12), cette dernière comprenant un organe sphérique (62) à une extrémité, le bâti de montage comprenant une douille coopérant avec l'organe sphérique pour réaliser un joint à rotule qui constitue une liaison articulée à ladite extrémité de la tige de piston.

19. Transporteur à plateaux à mouvement alternatif suivant la revendication 18, comprenant des éléments de bâti (82,84) à l'extrémité opposée de la tige de piston (12) afin de limiter un déplacement de la tige de piston latéralement et vers le haut et vers le bas, mais permettant un déplacement de ladite tige de piston dans le sens longitudinal par rapport aux éléments du bâti.

20. Transporteur à plateaux à mouvement alternatif suivant la revendication 10, comprenant:
une tige de piston tubulaire (12) creuse intérieurement;
un tube séparé de distribution de fluide (48) et un tube de retour de fluide (50) pour chaque première chambre à fluide, ces tubes s'étendant à travers ledit espace intérieur creux de la tige de piston (12), chaque tube ayant une extrémité interne positionnée de façon à communiquer avec sa première chambre à fluide (34,36,38) et une extrémité externe adjacente à la première extrémité de la tige de piston;
l'espace intérieur creux de la tige de piston délimitant un passage entre lesdits tubes et autour de ceux-ci; et
la tige de piston comprenant des conduits de distribution et de retour de fluide qui relient ledit passage de l'intérieur creux de la tige de piston à chacune des secondes chambres à fluide (40,42,44).

21. Transporteur à plateaux à mouvement alternatif suivant la revendication 20, dans lequel la tige de piston (12) est un organe tubulaire continu d'une seule pièce.

22. Transporteur à plateaux à mouvement alternatif suivant la revendication 21, dans lequel chaque tête de piston comprend un corps annulaire qui entoure la tige de piston (12) et est relié à celle-ci.

23. Transporteur à plateaux à mouvement alternatif suivant la revendication 22, dans lequel les corps annulaires des têtes de piston sont vissés sur la tige de piston (12).
